(19) **Europäisches Patentamt / European Patent Office / Office européen des brevets**

(11) **EP 2 081 274 A2**

(12) # EUROPEAN PATENT APPLICATION

(43) Date of publication:
**22.07.2009 Bulletin 2009/30**

(51) Int Cl.:
***H02J 7/14*** (2006.01)

(21) Application number: **08170661.6**

(22) Date of filing: **04.12.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **07.12.2007 DK 200701754**

(71) Applicant: **Reelight APS**
**8260 Viby J (DK)**

(72) Inventors:
- **Linnebjerg, Kenneth**
  **8370 Hadsten (DK)**
- **Hansen, Steffen**
  **8300 Odder (DK)**

(74) Representative: **Plougmann & Vingtoft A/S**
**Sundkrogsgade 9**
**P.O. Box 831**
**2100 Copenhagen Ø (DK)**

(54) **Electric driver circuit for bi-cycle applications**

(57)     The invention relates to a power device for powering a bi-cycle application, e.g. a light. The power device receives power from a bi-cycle generator and converts the generator power into a pulsed power signal by use of a switching converter. Thus, the voltage amplitudes of the power pulses are independent of the voltage amplitude of the generator power. The power device may also comprise one or more capacitors and/or batteries for storing generator power. By controlling the switching converter, the limited amount of generator power or the stored power can be utilised effectively.

Fig. 2

## Description

### FIELD OF THE INVENTION

The invention relates to an electric driver circuit for powering bi-cycle applications, and in particular to a switching converter for powering such applications.

### BACKGROUND OF THE INVENTION

The market for bi-cycle lights are primarily dominated by battery powered lights or hub dynamo powered lights. Battery powered lights provide a cost effective light, but require frequent exchange of batteries. Hub dynamo powered lights do not require batteries, but are rather expensive.

WO 2006/086987 discloses an electric converter for powering bi-cycle light. The Electric converter comprises at least two storage media for storing electric energy generated as a result of one or more magnets passing a coil. At least two of the storage media have different storing capacities. The storage media may be charged one at a time in a predefined order. This order may be that the storage medium to be charged first has the shortest charging time for being fully charged. The system may further comprise one or more controllers controlling the charging sequence.

WO2005/091462 discloses a method for charging a battery from a direct-current source liable to significant fluctuations, comprising the steps of: progressively charging a storage capacitor at a voltage that is higher than the nominal voltage of the battery, detecting a predetermined voltage threshold over the terminals of said storage capacitor, and discharging said storage capacitor into said battery, said discharging being controlled by said threshold detection. The method is applicable for charging lamp batteries.

It may be seen as a problem of the present invention to provide an electric converter having improved capabilities with respect to powering the bi-cycle applications. Such improvements may relate to improving the utilisation of stored electric energy, for example by utilising the stored electric energy more efficiently.

### SUMMARY OF THE INVENTION

Accordingly, the invention preferably seeks to mitigate, alleviate or eliminate one or more of the above mentioned problems singly or in any combination. In particular, it may be seen as an object of the present invention to provide an electronic driver circuit for powering a bi-cycle application so that even a small amount of stored electric energy can be utilised for powering the bi-cycle application.

This object and several other objects are obtained in a first aspect of the invention by providing an electronic driver circuit for powering a bi-cycle application, the driver circuit comprises an input for receiving an electric generator power, a storage unit for storing electric energy from the input and a switching converter for converting at least a fraction of the stored energy to a power pulse signal, where the energy content of each power pulse is controllable.

The invention is particularly, but not exclusively, advantageous for obtaining a more efficient conversion of stored electric power into a power signal suitable for powering bi-cycle applications.

Accordingly, in an embodiment of the first aspect of the invention the electronic driver circuit comprises a switching converter. It may be advantage to use a switching converter, since the switching converter is able to generate a power pulse signal where the energy content of each pulse of the power signal is controllable so that the energy content can be adjusted in dependence of various measures.

It may be an advantage that the energy content of each power pulse is controllable since this enables generation of power pulses where the energy content of each power pulse is substantially independent of the amount of stored electric energy in the storage unit. As an example, the voltage amplitude of each power pulse may be made independent of the amount of stored electric energy. Accordingly, the mean power supplied to a bi-cycle load, e.g. a light, may be controlled in dependence of the stored electric energy for effectively utilising the available amount of stored energy, for example by adjusting the delay between individual power pulses. Since the mean power supplied to the bi-cycle application may be controlled, the bi-cycle application may be utilised or powered more effectively.

In case the bi-cycle application is a bi-cycle light, the controllable mean power supplied to the light may provide for generation of flashing light which has a high intensity, at least for a fixed or adjustable period of time. Alternatively or in combination, the controllable mean power supplied to the light may be controlled, e.g. by adjusting delays between power pulses, to provide continuous light, i.e. non-flashing light. In case the bi-cycle application is for example a bi-cycle computer, the controllable mean power supplied to the computer may provide a means for powering of the bi-cycle computer without exposing the computer for voltages that are either too high or too low.

The storage unit may comprise a single capacitor with limited capacity in devices where storage capabilities of energy are not required. Alternatively, the storage unit may comprise a single capacitor with greater capacity for providing at least some storage capabilities, or the storage unit may comprise both a small capacitor combined with a large capacitor and/or battery so that a advantageous combination effect is obtained since the large capacitor and/or battery offers storage capabilities and the smaller capacitor offers low electric losses due to a low internal resistance of the smaller capacitor.

In an embodiment the electric driver circuit may comprise a switching controller for adjusting a charging time of a switching storage element, where the charging time is dependent on the electric energy stored by the storage unit.

In a corresponding embodiment, the switching controller may be configured for adjusting a charging time of a switching storage element so that the energy content of the power pulse is substantially independent of the stored electric energy.

Thus, by configuring the switching controller to charge the switching storage element for a duration which is determined on basis of the stored electric energy it may be possible control the electric energy contained in each power pulse, so that the power pulse energy remains constant, or at least substantially constant.

It may be an advantage that the energy contained in each power pulse remains substantially constant, since this may allow a more efficient powering of the bicycle application. For example, if the bi-cycle application is a bi-cycle light, the constant energy of each power pulse may enable a bi-cycle light having substantially constant illumination intensity at least for a given period of time, such as a period of time of a light blink or for a longer continuous period of time, such as several minutes.

When saying that the electric energy contained in the power pulses remains constant, the term, constant, should not be construed as a mathematical definition but should be understood relative to the energy content of a single pulse. Thus, variations of energy content within eg. 10 percent of the energy content of a given power pulse may be considered constant, or substantially constant.

In an embodiment the electric driver circuit comprises a pulse controller for adjusting a mean power of the power pulse signal, where the mean power of the pulsating power depends on the stored electric energy.

The mean power of the power pulse signal should be understood as the energy of the power pulse signal over a given period of time, divided by that period of time.

It may be an advantage to adjust the mean power of the power pulse signal in dependence of the stored electric energy, so that consumption of power (ie. the power dissipated in the bi-cycle load) is adapted to the available amount of energy, for example in order avoid completely draining the storage unit for stored energy.

In an embodiment the mean power of the power pulse signal is adjusted by changing a period of time between power pulses of the power pulse signal. Accordingly, by increasing the period of time between power pulses, the mean power is decreased, whereas the power of a single power pulse is unchanged.

It may be an advantage to decrease the power consumption by decreasing the mean power of the power pulse signal while maintaining the energy content of each individual power pulse, since maintaining the energy content of each individual power pulse may allow a more efficient powering of the bi-cycle application, for example the electric power to illumination power of light source may be optimised by operating the light source at a particular voltage.

In an embodiment the mean power of the power pulse signal is adjusted by changing a period of time between packets of power pulses and/or duration of packets of power pulses. Again, an achievement may be that the energy content of individual power pulses is maintained, whereas the mean power of the power pulse signal is decreased or increased.

In an embodiment, the storage unit of the electronic driver circuit comprises first and second storage elements, wherein the second storage element is adapted for supplying electric energy to the bi-cycle application when the generator power is insufficient for powering the bi-cycle application.

By using both a first storage element with small storage capacity and a second storage element with a large storage capacity, the second storage element may be used for storing electric energy so that this stored electric energy can be used for powering the bi-cycle application when the generator does not produce sufficient power which eventually might cause the first storage device to be drained for electric energy.

In an embodiment the storage unit comprises first and second storage elements, wherein the first storage element is adapted for supplying electric energy to the bi-cycle application when the stored energy in the second storage element is sufficient for powering the bi-cycle application.

It may be advantageous to use only the first storage device for powering the bicycle application when the stored energy in the first storage device is sufficient for powering the bi-cycle application. Accordingly, when only the first storage device is used for powering the bi-cycle application, excess energy from the generator can be stored in the second storage device.

In an embodiment, the storage unit comprises first and second storage elements, and the electronic driver circuit comprises a charging controller for controlling charging of the second storage element. It may be an advantage to use a charging controller for charging the second storage element, so that only excess power is stored in the second storage element.

In an embodiment the amount of electric energy supplied to the second storage element is dependent on an amount of energy stored by the first storage element.

In an embodiment, the bi-cycle application is an application selected from the list comprising bi-cycle lights and bi-cycle computers. The bi-cycle light may be a light emitting diode (LED) or a filament light source. The bi-cycle computer may be computer for measuring velocity or a GPS computer for position determination. The bi-cycle computer may comprise a storage device, for example a capacitor, for converting the power pulse signal into direct current (DC) signal for powering the computer.

In an embodiment the power pulse signal is a high-frequency signal with a frequency greater than 100 Hz, preferably greater than 1 kHz or even more preferred greater than 10 kHz. Similarly, the duration of a power pulse may be smaller than 500 micro seconds, preferably shorter than 50 micro seconds or even more preferred shorter than 5 micro seconds.

In an embodiment the switching converter is a switching coil converter or a switching capacitor converter. Thus, in a switching coil converter the energy storage element is a coil (inductor) and in a switching capacitor converter the energy storage element is a capacitor.

In a second aspect, the present invention relates to an electronic power generation system for powering a bi-cycle application comprising an electronic driver circuit according to the first aspect and a generator.

In an embodiment according to the second aspect, the generator comprises a first part capable of inducing a current in a second part upon movement of the first part relative to the second part, where the first part and second part are mechanically separated.

In an embodiment according to the second aspect, the first part, alternatively the second part, is configured for mounting on a bi-cycle wheel and the second part, alternatively the first part, is configured for mounting on a frame of the bi-cycle.

In a third aspect, the present invention relates to a bi-cycle comprising an electronic power generation system according to the second aspect.

In a forth aspect, the present invention relates to a method for powering a bicycle application, the method comprising,

- supplying electric generator power to a storage unit for storing at least a fraction of the supplied electric generator power as stored electric energy,
- converting a fraction of the stored electric energy to a power pulse signal using a switching converter, where the energy content of a power pulse comprised by the power pulse signal is controllable.

Thus, it is understood that even though the electric generator power is supplied with generator power, it may be so that a fraction is stored, e.g. 90 percent of the generator power, whereas the remaining 10 percent is immediately consumed by an electric load, e.g. the bi-cycle application. In fact, this may be the consequence of electrical laws such as Kirchhoff's current laws and Ohms laws. Alternatively, this may be the consequence of a deliberate design of the electric driver circuit. It is understood that the power pulse signal may be used for powering any bi-cycle application. It is also understood that an electric driver circuit implementing the method according to the fourth aspect may be sold as a device which does not include any bi-cycle applications, but is configured to be connectable with bi-cycle applications. Accordingly, the method according to this aspect does not necessarily comprise powering a bi-cycle application with the power pulse signal.

The first, second, third and fourth aspects of the present invention may each be combined with any of the other aspects. These and other aspects of the invention will be apparent from and elucidated with reference to the embodiments described hereinafter.

In summary the invention relates to a power device for powering a bi-cycle application, e.g. a light. The power device receives power from a bi-cycle generator and converts the generator power into a pulsed power signal by use of a switching converter. Thus, the voltage amplitudes of the power pulses are independent of the voltage amplitude of the generator power. The power device may also comprise one or more capacitors and/or batteries for storing generator power. By controlling the switching converter, the limited amount of generator power or the stored power can be utilised effectively.

BRIEF DESCRIPTION OF THE FIGURES

The present invention will now be explained, by way of example only, with reference to the accompanying Figures, where

Figure 1 shows a prior art electric driver circuit 100 for powering a bi-cycle application,
Figure 2 shows an electric driver circuit and various electrical and optical signals,
Figure 3 is a principal sketch of a switching converter,
Figure 4 shows a controller for controlling the switching converter,
Figure 5 illustrates different methods for controlling the generation of power pulses,
Figure 6 illustrates an embodiment of the storage unit comprising a first and second storage components, and
Figure 7 shows a generator comprising a first part capable of inducing electric current in a second part.

DETAILED DESCRIPTION OF AN EMBODIMENT

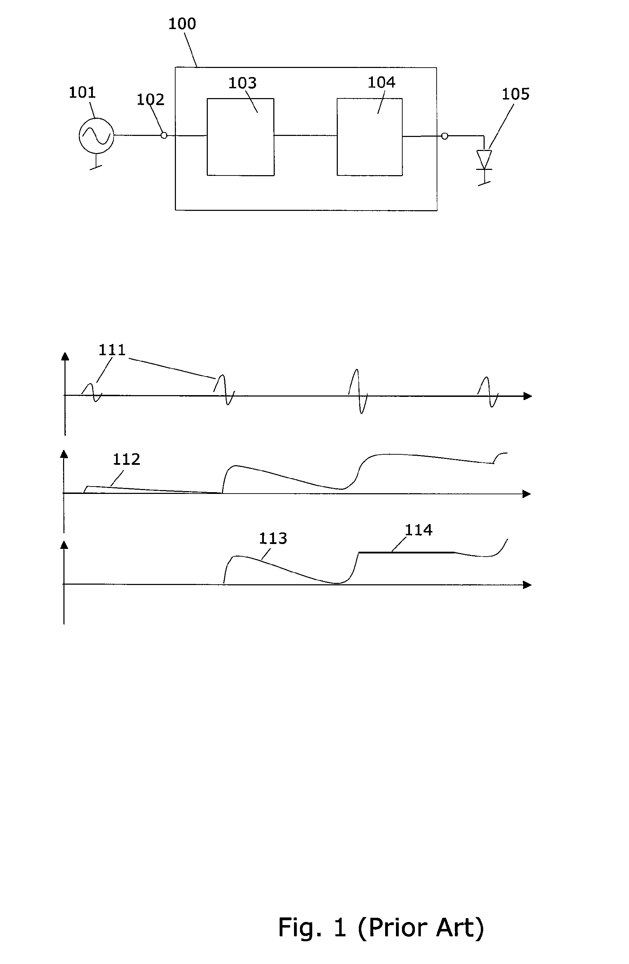

Figure 1 shows a prior art electric driver circuit 100 for powering a bi-cycle application, for example a bi-cycle light. Figure 1 also shows the various electric and optical signals 111-113. Generator power 111 from a generator 101 is supplied to a storage unit 103 comprised by the driver circuit 100. Accordingly, electric energy 112 is accumulated and stored by the storage unit 103. An optional power converter 104, for example a linear voltage regulator, produces a power signal suitable for powering the bi-cycle light 105. By suitable is for example meant that the voltage supplied to the light 105 is regulated down to a suitable level to avoid breakdown of the light source 105. The curve 113 illustrating the optical illumination power emitted by the light 105, shows that the illumination power varies in dependence of the available electric energy 112 so that, initially no light is emitted at all since electric energy 112 is insufficient to produce a voltage high enough to generate illumination; subsequently, illumination with non-constant power 113 is produced and finally, the illumination is limited to a max level 114 since the power converter 104 regulates the voltage down to an acceptable level.

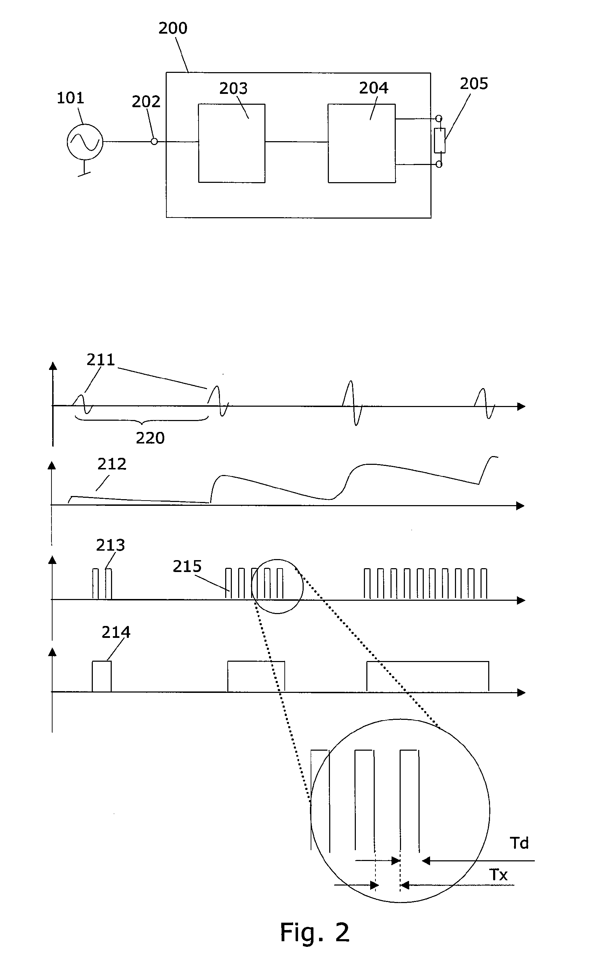

Figure 2 shows an electric driver circuit 200 according to an embodiment of the invention as well as various electrical and optical signals 211-214. The electric driver circuit may be used to power various bi-cycle applications comprising bicycle lights, cycle-computers, GPS applications, bi-cycle actuators such as an electric lock, and anti-theft systems.

The electric driver circuit 200 is connectable to a power generator 101, for example a bi-cycle generator, via input 202. The electric driver circuit comprises an input 202 for receiving power from the power generator 101 and a storage unit 203 which is adapted to receive electric generator power 211 from the input 202. The storage unit may comprise one or more rectifier diodes for rectifying the generator power 211 and one or more capacitors for storing electric energy. Alternatively, rectifying diodes may be omitted if rectifying is un-necessary or the generator current is not alternating. Also, the rectifying diodes may be located elsewhere. The electric energy stored by the storage unit may be illustrated by signal 212, such as a voltage signal, a current signal, an energy signal or a power signal 212. The electric energy stored by a capacitor is given by $E = 0.5\ C\ V^2$ where C is the capacitance and V is the voltage difference measured over the capacitor; accordingly, the stored energy may equivalently be described by a voltage (V). Similarly, a current or a power may be related to the stored energy since the stored energy is able to produce a power or current upon discharging the storage unit 203. Furthermore, a count of generator pulses 211 multiplied with the energy content of each pulse may provide an equivalent measure of the stored energy 212. Here, the energy content of each pulse could be obtained by measuring power, voltage, current or frequency of each individual generator pulse 211. Accordingly, the signal 212 should not only be construed as an energy, power or voltage signal, but should be understood broadly since the signal may be represented by various measures.

The electric driver circuit 200 further comprises a switching converter 204 for converting electric energy supplied by the storage unit 203 into a power pulse signal 213.

The principle of the switching converter 204 will be described below with reference to signals 211-214. Accordingly, the electric driver circuit 200 is provided with generator power 211, which is stored by storage unit 203. The stored energy is represented by energy signal 212. The switching converter 204 is able to convert the stored energy into a power pulse signal 213. The power pulse signal 213 comprises a number of power pulses 215. The power pulses 215 may have substantially the same pulse length Td and may contain substantially the same amount of energy. Consequently, the mean electric power or the mean illumination power provided during the pulse length Td may be substantially the same for each pulse 215. Alternatively, it can be said that the electric energy contained in a power pulse 215 or illumination energy emitted from a light source 105 in response to a power pulse 215 is the same or substantially the same for all power pulses 215.

The period of time Tx between succeeding pulses 215 is normally so small that the period Tx is not visible by the human eye and, therefore, the human perception of a series of pulses 215 can be described as periods of constant or substantially constant illumination power 214.

The waveforms of the signal 211-215 are shown as examples of such signals, and should not be understood as limiting examples since similar signals may have different waveforms depending of the type of power generator 101, storage unit 203 and switching converter 204.

The power pulse signal 213 is illustrated with a non-constant number of pulses 215, however, since the power pulse signal 213 can be generated in various ways without departing from the general idea of the invention, similar power pulse signals 213 may be generated so the number of pulses within each period 220 is constant or substantially constant. Similarly, the period Tx between pulses may be non-constant or constant.

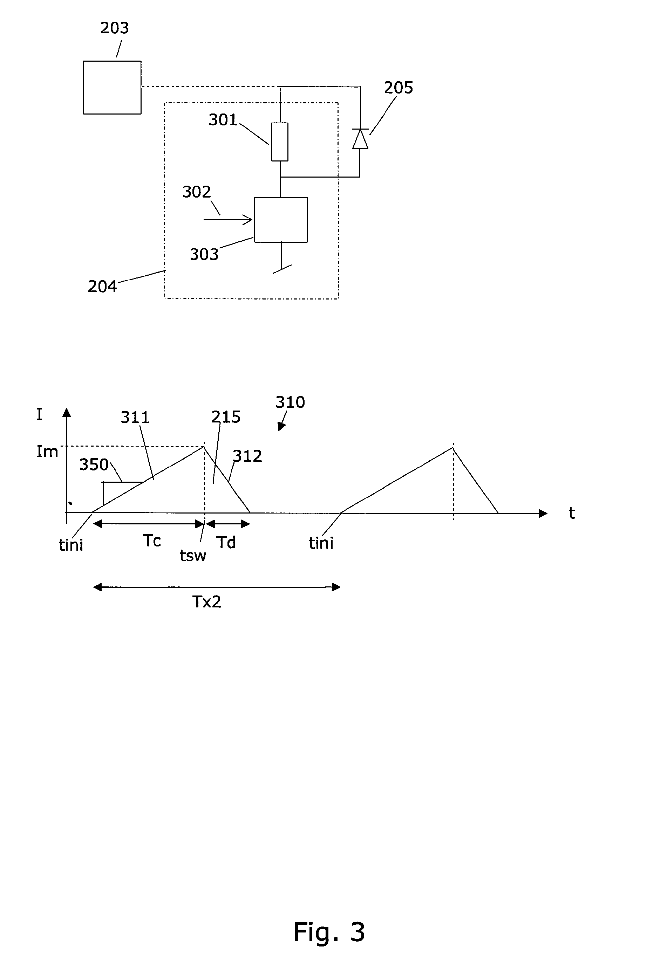

Figure 3 is a principal sketch of a switching converter 204. The switching converter comprises a switching storage element 301, which in this example is an inductor, and a switching element 303, for example a transistor or a FET. When the switching element is open, current flows from the storage unit 203 through the inductor 301 so that magnetic energy is stored in the inductor.

The graph in Figure 3 is a principal sketch showing the amplitude I of currents 311 and 312 as a function of time, t. At point tini, the switching element 303 is opened and a charging current 311 starts flowing through the inductor 301, as shown in diagram 310. At some point tsw the switching element 303 is closed, whereby the stored magnetic energy generates a discharging current 312. The discharging current 312 flows through the light source 105 so that a light pulse is generated in response to the stored induction energy.

Accordingly, the discharging current 312 corresponds to the power pulse 215. Since the discharging current 312 gradually decreases, the radiation power from emitted form the light source 315 also gradually decreases. However, since the human eye is not able to percept the fast change of the radiation power, the radiation power emitted during the short discharging period Td, may be described as a mean power emitted during the period Td, as illustrated by the square pulses 215 in Figure 2.

The duration of Tc may be in range from 0.02 to 500 micro seconds, more preferably in the range from 1 to 10 micro second, for example between 3 and 5 micro seconds. The duration of Td is approximately within the same range as Tc, for example within the range from 1 to 5 micro seconds. Accordingly, the frequency of power pulses 215 are typically in range of a few kHz to a few MHz. However, in some embodiments the frequency may be several MHz, for example 10 or 100 MHz.

Even though the discharging current 312 is shown as a linear decreasing current, practical measurements of the discharging current will likely show some nonlinearity. In other embodiments, capacitive or inductive loads 205 could cause other waveforms of the discharging current, for example exponential decreasing waveforms.

The electric energy discharged during discharging period Td is equal to, or including electric losses, substantially equal to the energy stored by the inductor 301. The energy stored by the inductor is equal to, or including losses, substantially equal to the supplied electric energy of the charging period Tc. Accordingly, by ensuring that the electric energy of the charging period Tc is the same for each charging period Tc, the electric energy discharged during each discharging period Td, or equivalently the energy of each power pulses 215, also remains at least substantially constant for each discharging period Td.

By charging the inductor 301 until the current equals Im, the stored magnetic energy approximately equals $0.5 \, L \, Im^2$. The length of the charging period Tc depends on the electric potential across the inductor 301, i.e. the higher potential the shorter charging period Tc and vice versa. Therefore, it is possible to generate power pulses 215, where each power pulse contains the same, or substantially the same, energy ($0.5 \, L \, Im^2$) by adjusting the charging time Tc, so that the current at point tsw equals Im.

Thus, the energy content of the power pulses 215 is controlled by adjusting the charging time Tc. Therefore, it is possible to generate power pulses 215 having substantially constant energy content independent of the energy stored by the storage unit 203, i.e. independent of the amplitude of the energy signal 212.

The opening and closing of the switching element is controlled by applying appropriate opening and closing signals to the input 302. The opening and closing signals may be generated by a control unit, for example an electronic circuit or a micro processor. In the example shown in Figure 3, the storage unit 203 is connected directly to the storage element 301, as indicated by the dashed connection. However, in other embodiments, the storage unit 203 may be indirectly connected to the storage element 301 via other electronic devices or circuits.

When the bi-cycle load 205 is a light emitting diode (LED), the voltage across the LED remains substantially constant during the discharging period and, therefore, the illumination power emitted by the LED also remains substantially constant during the discharging period Td. This is due the inherent voltage/current characteristics of a LED.

Instead of using an inductor as a storage element 301, a capacitor may be used. In this case the capacitor is charged by opening a switching element 303 during a charging period until a certain voltage Vm across the capacitor is obtained. When a certain voltage Vm is obtained, the energy stored by the capacitor equals $0.5 \, C \, Vm^2$, where C is the capacitance. When the voltage across the capacitor reaches Vm, the capacitor can discharged similar to discharging the inductor by closing the switching element 303 so that the energy stored in the capacitor can be will be dissipated in the bi-cycle application 205.

When reference is made to a light source 205, this should not be understood as a limiting example since other bi-cycle applications may additionally, or alternatively, be powered by the pulse power signal. For example, a bi-cycle computer provided with a converter for converting the pulse power signal 213 into a suitable electric DC power signal may be powered by the pulse power signal 213.

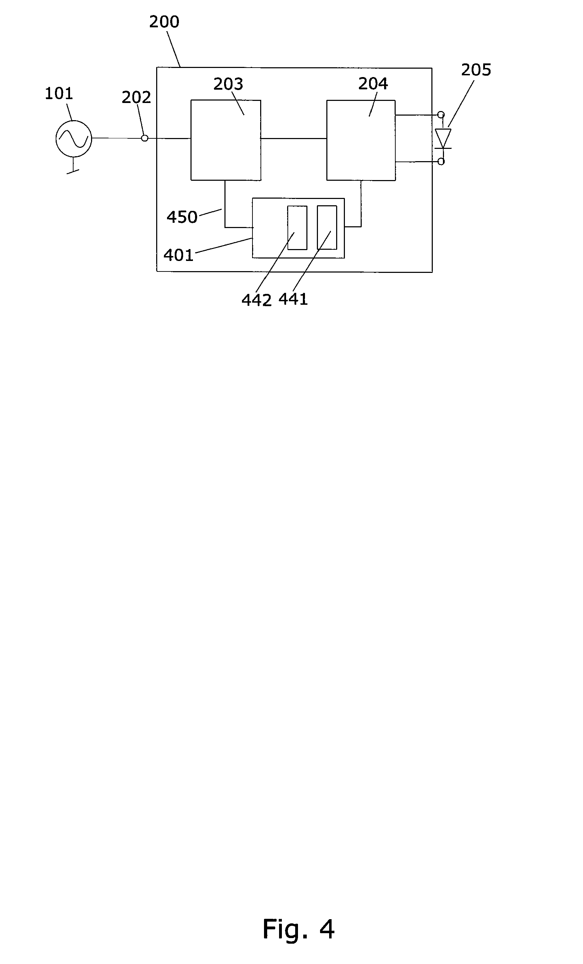

Figure 4 shows the electric driver circuit 200 being augmented with a controller 401. For the elements in Figure 4 having the same reference sign as the corresponding elements in Figure 2, the description from Figure 2 applies equally and, therefore, a detailed description is omitted here.

The controller 401 is connected to the switching converter 204 for the purpose of controlling the switching converter 204, for example by supplying an opening/closing signal to the switching element 303.

The particular function for controlling the switching converter 204 may carried out by the controller 401. However, since the controller 401 may be configured to carry out multiple functions, then for reasons of convenience and clarity, a switching controller 401 or 441 should be understood as a device for performing the function of controlling the switching converter 204. The switching controller 441 may be comprised by the controller 401, or the switching controller 441 may be a distinct device.

As described previously, it may be desirable to control the switching converter 204 so that the energy content of each power pulse 215 remains at least substantially constant. For the case where the storage element 301 is an inductor, control of the energy content of the power pulses 215 may be achieved by controlling the duration Tc of the charging current 311, so that the switching controller 441 generates a closing signal when the current approaches or equals a threshold current Im. For example, the switching controller 441 may be configured to measure the current I of the charging current 311, so that the storage element is charged up to, but not beyond, the desired current Im.

The rate of charging the storage element 301 depends on the voltage across the storage element which again depends on the energy stored in the storage unit 203. Accordingly, by measuring or estimating the energy stored in the storage unit 203, the rate of charging 350 can be determined, so that the necessary charging time Tc for charging up to current Im can be determined or predicted.

In an embodiment, the switching controller 441 or the controller 401 determines the energy stored in the storage unit 203 by measuring a voltage on a terminal of a capacitor comprised by the storage unit 203, for example via a connection 450 to the storage unit 203. On basis the measured voltage, the necessary charging time Tc can be determined for example by deriving the charging time Tc or by looking up the charging time in a look-up table which contains charging times Tc for different values of measured voltages. The look-up table may have been determined on experimental basis.

In principle the charging time can be determined from the equation:

$$0.5 L I_m^2 = \int_0^{Tc} I V \, dt$$

which equates the energy of the inductor with the time integrated power supplied to the storage element 301. In the equation, L is the inductance of the inductor, Im is the desired maximum current, I is the current 311 which is known or can be estimated since the energy stored in the storage unit 203 is known, and V is the voltage across the inductor which can be determined since I and L are known. Accordingly, the variable Tc can be determined from the equation.

The switching controller 441 could also determine the energy stored in the storage unit 203 by measuring a current from the storage unit, for example a peak current from the previous charging period Tc. Since the current from the storage unit 203 corresponds to the voltage across the capacitor comprised by the storage unit 203, such current measurement may equally be used to determine the energy stored by storage unit 203 for predicting or determining the required charging period Tc.

Alternatively, the switching controller 441 could determine the energy stored in the storage unit 203 by counting the number of generator pulses 211 supplied to the storage unit 203, and correcting (by subtraction) for the energy being discharged from the storage unit 203 by counting the number of power pulses 215. The energy content of each power pulse 215 is known and the energy content of the generator pulses 211 could be determined by measuring the energy content or estimating the energy content on basis of for example the frequency of generator pulses 211.

The switching controller 441 may further be used to control the delay Tx between power pulses 215 or the period Tx2 between successive times points, tini.

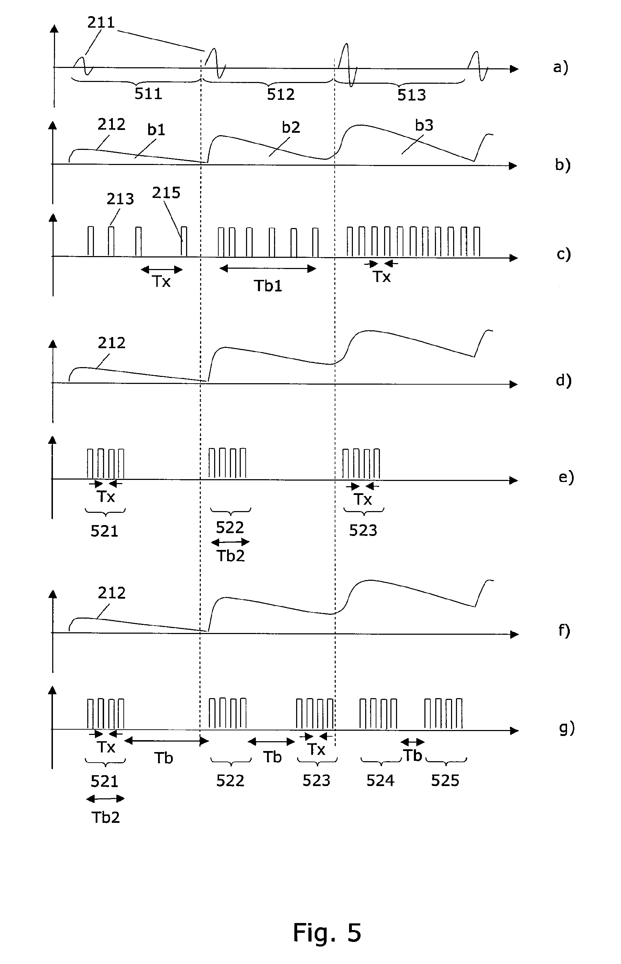

Figure 5 illustrates different methods for controlling the generation of power pulses 215. For elements in Figure 5 having the same reference sign as the corresponding elements in Figure 2, the description from Figure 2 applies equally and, therefore, a detailed description is omitted here

Diagram c shows that the period between power pulses Tx is adapted to stored energy 212 in the storage unit 203. After the first generator pulse 211, the energy content b1 is rather low. In order to ensure that power pulses 215 are distributed throughout the first period 511, the time Tx between pulses is adjusted so the energy content b1 only approaches zero at the end of the first period 511.

After the next generator pulse 211 in the second period 512, the energy content b2 is larger and, therefore, the period Tx between power pulses can be decreased and the number of pulses increased. After the next generator pulse 211 in the third period 513, the energy content b3 is even larger and, therefore, the period Tx between power pulses can be decreased further.

Since the stored energy 212 decreases during a period 511-513 and, therefore also the voltage across a capacitor comprised by the storage unit 203, the charging time Tc needs to be adjusted so that the energy content of the pulses 213 remains substantially constant during a period 511-513.

By distributing the power pulses over the periods 511-513 and using all, or a fraction, of the available energy (b1, b2, b3) it is possible to generate light from the radiation source 205 which is perceived as continuous light since the human eye is not able to percept small periods Tx where no light is emitted and since the period Tb1 (Tb1 corresponds to period 214 in Fig. 2) is substantially equal to the periods 511-513 between generator pulses 211. For example periods Tx less than 0.05 seconds are normally imperceptible.

Thus, even though power pulses 215 are generated as a power pulse signal 213 with varying periods Tx between pulses, the light emitted from a light source 205 appears to be continuous. This may be an advantage since legislation in some countries requires continuous illumination form bicycle lights.

Diagram e in Figure 5 shows another embodiment where the power pulses are generated during periods 521-523 as packets 521-523 of power pulses 215. The packets of power pulses 521-523, have shorter durations than periods 511-513 between generator pulses 211. Since the duration Tb2 of the packets of power pulses 521-523 are shorter than the periods 511-513, light emitted form a light source 205, may be perceived as flashing light. In the embodiment illustrated in diagram e, the periods Tx may be constant or they may be adapted to the stored energy 212. Also, the duration Tb2 of the packets of power pulses 521-523 and/or the frequency of the packets 521-523 may be constant or they may be adapted to stored energy 212.

The frequency of the packets 521-523 may be greater than 1 Hz, preferably greater than 3 Hz or even more preferred the frequency may be greater than 6 Hz. In an embodiment, the frequency of packets 521-523 may be adapted to the energy stored in the storage unit 203, so that when a small amount of energy is stored, the frequency of packets 521-523 is e.g. less than 3 Hz. When more energy has been stored in the storage unit 203, the frequency may be fixed to 3 Hz, and when even more energy has been stored the frequency may be greater than 3 Hz and continuously adapted to stored energy 212.

The duration of the packets of power pulses 521-523 may be within the range from 0.5 to 1 seconds, within the range from 0.3 to 0.5 seconds, within range from 0.1 to 0.3 seconds, or even smaller than 0.1 seconds, in dependence of the frequency of the of the packets 521-523 and/or dependent on whether the light should be continuous or blinking.

It may be an advantage to have packets of light flashes 521-523 of duration Tb2 being shorter than Tb1, since the shorter light flashes 521-523 may be perceived as having a higher brightness than the emitted light corresponding to the example of diagram c.

It may be another advantage to have packets of light flashes 521-523 of duration Tb2, since it may allow to gradually increasing the stored energy 212 as illustrated in diagram d.

It should be understood that the frequency of the packets of power pulses 521-523 does not need to be synchronised with the generator pulses 211. Diagram g shows an embodiment where the delay Tb between packets of power pulses 521-525 varies in dependence of the stored energy 212 so that, as the stored energy 212 increases, the packet delay Tb can be decreased. Therefore, as the stored energy 212 increases, the frequency of packets of power pulses 521-525 increases and, correspondingly, the blinking frequency fb, of light pulses of duration Tb2, increases. When the amount of stored energy 212 is high enough, the delay Tb may be decreased, possibly even to zero, so the light emitted from the radiation source 105 is continuous or is perceived as continuous.

Thus, be adjusting one or more parameters comprising pulse delay Tx or Tx2, packet delay Tb, packet duration Tb1 or Tb2 and blink frequency fb, it is possible to adjust the mean power of light emitted from the light source 105 in dependence of the available amount of energy stored in storage unit 203 by adjusting the mean power of the power pulse signal 213. Thus, it is possible to continuously optimise the utilisation of electric power generated by the generator 101. For example, when the amount of stored energy 212 is low, it may be desirable to limit the amount of power dissipated in the bi-cycle load, for example by increasing the delay Tb. Only when a certain amount of energy is stored in the storage unit 203, the delay Tb can be decreased and/or the duration Tb2 can be increased or delay Tx or Tx2 can be decreased or any combination thereof. Thus, as the amount of stored energy 212 gradually increases the mean power to be dissipated in the bi-cycle application 205 may be gradually increased by adjusting any of the mentioned temporal parameters Tx, Tx2, Tb, Tb2 and fb.

Thus, by adjusting anyone of the pulse delay Tx or Tx2, the packet delay Tb, the packet duration Tb2 or packet frequency fb, the mean power of light emitted from the light source 105, or transferred to any bi-cycle application 205, is adjusted correspondingly. Mean power should be understood as the amount of energy transferred to the bi-cycle application 105 per unit time or any other suitable period of time, for example the duration of generator periods 511-513 or packet periods 521-525.

Thus, whereas the charging time Tc is adapted to the stored energy 212 to provide equal power pulses 215, the other temporal parameters comprising Tx, Tx2, Tb, Tb2 and fb, may be adjusted independently of the stored energy 212 as long as the storage unit is not drained for electric energy. This may be advantageous, since it is possible to utilise the stored energy 212 in different ways as described in relation to diagrams c, e, and g in Fig. 5.

The particular function for controlling the timing of the parameters Tx, Tx2, Tb, Tb1, Tb2 and fb may carried out by the controller 401. However, since the controller 401 may be configured to carry out multiple functions, then for reasons of convenience and clarity, a timing controller 442 should be understood as a device for performing the function of controlling the parameters Tx, Tx2, Tb, Tb1, Tb2 and fb.

The timing controller 442 may be comprised by the controller 401, or the timing controller 441 may be a distinct device. Additionally, the charging controller 441 may be used for performing one or more of the functions performed by the timing controller 442.

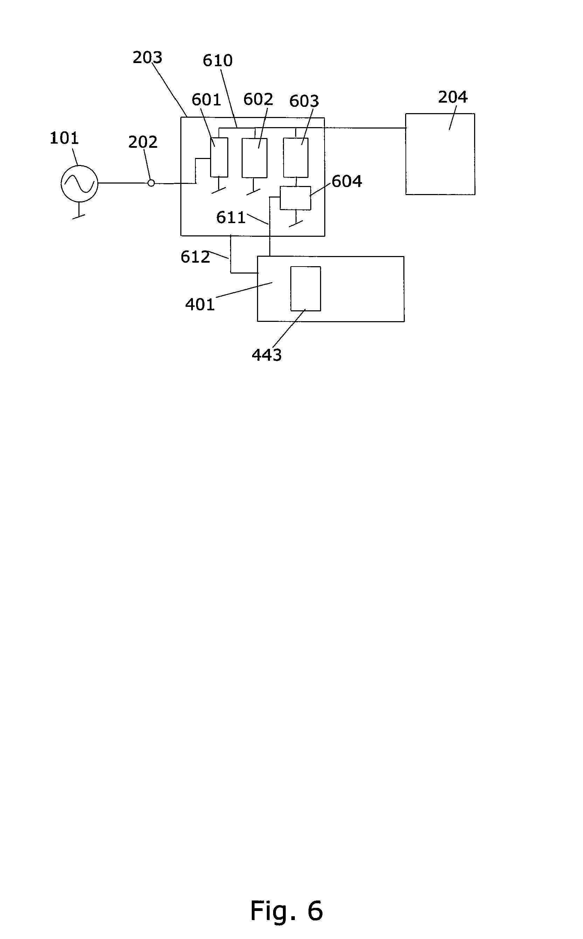

Figure 6 illustrates an embodiment of the storage unit 203 comprising a first storage component 602 and a second storage component 603. The second storage component 603 is optional and, therefore, the function of the storage unit 203 comprising only the first storage component is equivalent to the function of the storage unit as described in connection with Figures 2 and 4.

As described previously, the storage unit 203 is supplied with electric power from the generator 101. The electric power signal may be rectified by a rectifying circuit 601 which supplies a rectified power signal to the first storage component 602 via connection 610. In some situations the generator produces more power than is required for powering the bi-cycle application 205; in such situations the first storage component 602 will eventually be fully charged.

Therefore a second storage component 603 may be used to store excess power, which would otherwise be lost. For that purpose a switching element 604 may be used to enable charging of the second storage component 603 by opening for a flow of current through the second storage component 603 and a switching element 604. The switching element 604 may be seen as a switch which may be closed or open; when it is closed current can pass through the switch and when it is open current is prohibited to pass through. The opening and closing of the switching element 604 may be controlled via connection 611 by the controller 401 or the charging controller 441.

The particular function for controlling the charging of the second storage element 603 may be carried out by the controller 401. However, since the controller 401 may be configured to carry out multiple functions, then for reasons of convenience and clarity, the charging controller 443 should be understood as a device for controlling charging of the second storage component 603.

The charging controller 443 may be comprised by the controller 401, or the charging controller 443 may be a distinct device.

The charging controller 443 may be configured to control opening of the switching element 604 in dependence of the amount of stored energy in the first storage component 602. For example, when the charging controller 443 detects (eg. via connection 612) that the stored energy 212 has reached a given threshold, for example a percentage of the nominal storage capacity of the first storage component, the controller 401 opens the switching element 604 so that current is allowed to charge the second storage component 603.

In practice the charging controller 443 may be configured to control opening of the switching element 604 in dependence of the voltage measured at connection 610. For example, when the charging controller 443 detects that the voltage has reached a given voltage, the charging controller 443 opens the switching element 604 so that current will flow into the second storage component 603. Thus, in general the charging controller 443 is adapted to control charging of the second storage element 603 and, in particular, the charging controller 443 may be adapted to control the amount of power supplied to the second storage unit.

As shown in Figure 6, when switching element 604 is open (effectively this corresponds to short-circuiting the switching element) the first and second storage elements 602 and 603 can be seen as parallel coupled storage elements, such as parallel coupled capacitors. Accordingly, when switching element 604 is open current will flow from the first storage element 602 to the second storage element 603 if the voltage potential of the first storage element 602 is greater than the potential of the second storage element 603. By controlling the amount of charge being transferred from the first storage element 602 to the second storage element 603, for example by opening the switching element for a limited period of time, it is ensured that the a sufficient amount of energy stored by the first storage element 602 still remains for powering the by-cycle application 205. If all electric energy was drained from the first storage element 602 to the second storage element 603, the voltage potential at connection 610 might drop a level being too small for driving the switching converter 204 efficiently.

Thus, in general, the charging controller 443 may be adapted to control charging of the second storage element 603, and/or it may be adapted to control the amount of electric energy supplied to the second storage element 603, in dependence of the amount of energy stored by the first storage element 602. This may be achieved by measuring the energy contained in the first storage element 602, for example by measuring the voltage over the first storage element 602 and controlling the opening and closing of the switching element 604 in dependence of the measured energy.

Accordingly, during periods when the generator 101 is not able to supply enough power to the storage unit 203, the electric energy stored in the second storage element 603 can be used to power the bi-cycle application. Accordingly, the second storage element 603 is adapted for supplying electric energy to the bicycle application 205 when the generator power and/or the stored energy 212 is insufficient for powering the bi-cycle application. It is understood that when the second storage element 603 is adapted for supplying electric energy to the bicycle application 205, this does not necessarily mean that the energy is transferred directly from the second storage element 603 to the switching converter 204, since energy stored by the second storage element 603 may first be transferred to the first storage element 602 before the energy is transferred to the switching converter 204. In fact, the second storage element 603 may be a specialized capacitor - known as a super capacitor - which is not suited to deliver high levels of energy during short charging periods Tc due to a high internal resistance.

Oppositely, when the generator 101 is able to supply sufficient electric energy for powering the bi-cycle application, or when sufficient electric energy is stored in the first storage element 602, the first storage element 602 may be adapted to supply electric energy to the application 205.

During periods where the second storage element 603 is fully charged, the first storage element 602 may be adapted to supply electric energy to the application 205 while the energy stored by the second storage element 603 is maintained by supplying small amounts of energy to the second storage element at given or predetermined intervals.

The first and second storage components 602 and 603, may be electric capacitors. The first capacitor 602 may have a capacitance greater than 10 micro Farad, preferably greater than 100 micro Farad or more preferred greater than 1000 micro Farad. The second storage component 603 preferably has a capacitance greater than 0.001 Farad, preferably greater than 0.01 Farad or more preferred greater than 0.1 Farad. The second storage component 603 may be a component known as a super-capacitor. Alternatively, the second storage component may be a rechargeable battery. The switching element 604 may be a transistor, a FET or the like.

In an embodiment where the storage unit 203 only comprises a single storage component, the single storage component may have a size corresponding to the first capacitor 602 offering only limited capabilities for supplying energy when no generator power is supplied. Such a storage unit 203 comprising only a capacitor with limited capacity may be desirable in electric driver circuit 200 where the functionality of storing energy in a second larger capacitor is dispensed with. Alternatively, the single storage component may a larger capacitor corresponding to the second capacitor 603.

The first and second storage components 602 and 603 may be utilised for intelligent powering of the bi-cycle application 105 where the mean power supplied to the application is controlled as a function of the energy stored in the first storage elements 602 and/or the second storage element 603.

In an embodiment, the controller 401 is powered via stored energy from the storage unit 203. This may be achieved by powering the controller 401 when a certain amount of energy 212 has been stored in the storage unit 203. In practice, when the voltage of a capacitor comprised by the storage unit 203 exceeds a first threshold the converter 401 is powered. Only when said voltage exceeds a second threshold greater than the first threshold, the switching converter 204 is powered.

The generator 101 may be a bi-cycle dynamo driven via friction between a bicycle tire and a rotating part of the dynamo. The generator 101 may also be a so-called hub-dynamo where the electro-magnetic generator is integrated within the bi-cycle hub.

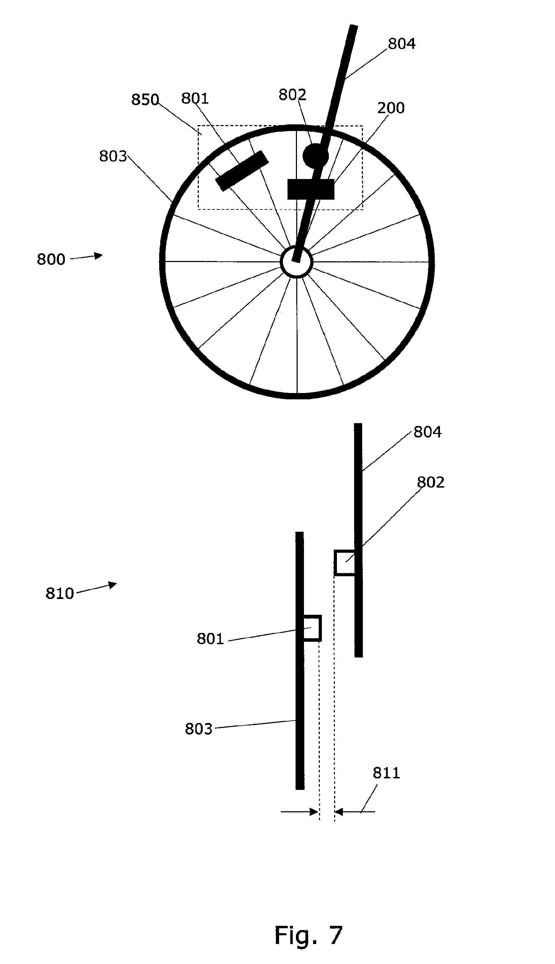

Figure 7 shows an alternative generator comprising a first part 801,802 capable of inducing electric current in a second part 802,801 upon movement of the first part relative to the second part. The first part may either comprise the fixed element 802 mounted on a frame 804 of a bi-cycle or the first part may comprise the moveable element 801 mounted on a rotating part of the bi-cycle, for example a wheel 803. Respective to the first part, the second part may either comprise the moveable element 801 mounted on the rotating part or the second part may comprise the fixed element 802 mounted on the frame 804.

Figure 7 shows a side view 800 of the wheel 803, frame 804 and first and second parts 801,802 as well as a corresponding front view 810.

The first part 801,802 may comprise one or more magnets for inducing an electric current in a coil comprised by the second part 801,802. Alternatively, the second part 801,802 may comprise one or more magnets for inducing an electric current in a coil comprised by the first part 801,802. The generation of current in the coil upon movement of the magnet relative to the coil is caused by electro-magnetic induction. The current generated in the coil is supplied to the electric driver circuit 200 via input 202.

Thus, in general the generator 101 may be a generator comprising a first part 801, 802 capable of inducing a current in a second part 802, 801 upon movement of the first part relative to the second part, where the first part and second part are mechanically separated by a distance 811.

A generator of the kind comprising a first part capable of inducing electric current in a second part upon movement of the first part relative to the second part is described in EP patent EP1165361B1 which is hereby incorporated by reference.

Dotted rectangle 850 illustrates an electronic power generation system 850 for powering a bi-cycle application 205 comprising an electronic driver circuit 200 and a generator 101.

In an embodiment, the generator 101 comprises a first part 801,802 capable of inducing a current in a second part 802,801 upon movement of the first part relative to the second part, where the first part and second part are mechanically separated.

The electronic driver circuit 200 may by fixed to, or integrated with, the first part 801,802 or the second part 801,802 (not illustrated). Alternatively, as illustrated in Figure 7, the electronic driver circuit 200 may be a separate unit connectable to the first part 801,802 or the second part 801,802.

In an embodiment the electronic power generation system 850 further comprises the bi-cycle application. The bi-cycle application may for example by a light or a cycle-computer integrated with the electronic driver circuit 200.

Although the present invention has been described in connection with the specified embodiments, it is not intended to be limited to the specific form set forth herein. Rather, the scope of the present invention is limited only by the accompanying claims. In the claims, the term "comprising" does not exclude the presence of other elements or steps. Additionally, although individual features may be included in different claims, these may possibly be advantageously combined, and the inclusion in different claims does not imply that a combination of features is not feasible and/or advantageous. In addition, singular references do not exclude a plurality. Thus, references to "a", "an", "first", "second" etc. do not preclude a plurality. Furthermore, reference signs in the claims shall not be construed as limiting the scope.

## Claims

1. An electric driver circuit (200) for powering a bi-cycle application (205), the driver circuit comprises an input (202) for receiving an electric generator power, a storage unit (203) for storing electric energy (212) from the input and a switching converter (204) for converting at least a fraction of the stored energy to a power pulse signal (213), where the energy content of a power pulse (215) comprised by the power pulse signal (213) is controllable.

2. An electric driver circuit (200) according to claim 1, further comprising a switching controller (441, 401) for adjusting a charging time of a switching storage element (301), where the charging time is dependent on the electric energy stored by the storage unit (203).

3. An electric driver circuit (200) according to claim 1, further comprising a switching controller (441, 401) for adjusting a charging time of a switching storage element (301), so that the energy content of the power pulse (215) is substantially independent of the stored electric energy (212).

4. An electric driver circuit (200) according to claim 1, further comprising a timing controller (442,401) for adjusting a mean power of the power pulse signal (213), where the mean power of the power pulse signal (213) depends on the stored electric energy (212).

5. An electric driver circuit (200) according to claim 4, wherein the mean power of the power pulse signal (213) is adjusted by changing a period of time (Tx, Tx2) between power pulses (215) of the power pulse signal (213).

6. An electric driver circuit (200) according to claim 4, wherein the mean power of the power pulse signal (213) is adjusted by changing a period of time (Tb) between packets (521-525) of power pulses (215), a frequency (fb) of packets (521-525) and/or a duration (Tb2) of packets (521-525) of power pulses (215).

7. An electronic driver circuit (200) according to any of the preceding claims, wherein the storage unit (203) comprises first and second storage elements (602, 603), wherein the second storage element (603) is adapted for supplying electric energy to the bi-cycle application (205) when the generator power (211) is insufficient for powering the bi-cycle application.

8. An electronic driver circuit (200) according to any of the preceding claims, wherein the storage unit comprises first and second storage elements (602, 603), wherein the first storage element (602) is adapted for supplying electric energy to the bi-cycle application (105) when the stored energy (212) and/or the generator power (211) is sufficient for powering the bi-cycle application (205).

9. An electronic driver circuit (200) according to any of the preceding claims, wherein the storage unit (203) comprises first and second storage elements (602, 603), and wherein the electronic driver circuit comprises a charging controller (443,401) for controlling a charging of the second storage element (603).

10. An electronic driver circuit (200) according to claim 9, wherein the amount of electric energy supplied to the second storage element (603) is dependent on an amount of energy stored by the first storage element (602).

11. An electronic driver circuit (200) according to any of the preceding claims, wherein the bi-cycle application (205) is selected from the list comprising a light source, a cycle-computer, a GPS application, a bi-cycle actuator, and an anti-theft system.

12. An electric driver circuit (200) according to any of the preceding claims, wherein the power pulse signal (213) is a high-frequency signal with a frequency greater than 100 Hz, preferably greater than 1 kHz or even more preferred greater than 10 kHz.

13. An electric driver circuit according (200) according to any of the preceding claims, wherein the switching converter (204) is a switching coil converter or a switching capacitor converter.

14. An electronic power generation system (850) for powering a bi-cycle application (205) comprising an electronic driver circuit (200) according to claim 1 and a generator (101).

15. An electronic power generation system (850) according to claim 14, wherein the generator comprises a first part (801,802) capable of inducing a current in a second part (802,801) upon movement of the first part relative to the second part, where the first part and second part are mechanically separated.

16. An electronic power generation system (850) according to claim 15, where the first part (801, 802), alternatively the second part (802, 801), is configured for mounting on a bi-cycle wheel (803) and the second part, alternatively the first part, is configured for mounting on a frame (804) of the bi-cycle.

17. A bi-cycle comprising an electronic power generation system (850) according to claim 14.

18. A method for powering a bi-cycle application (205), the method comprising,

- supplying electric generator power (211) to a storage unit (203) for storing at least a fraction of the supplied electric generator power (211) as stored electric energy (212),
- converting a fraction of the stored electric energy to a power pulse signal (213) using a switching converter (204), where the energy content of a power pulse (215) comprised by the power pulse signal (213) is controllable.

Fig. 1 (Prior Art)

Fig. 2

Fig. 3

Fig. 4

Fig. 5

Fig. 6

Fig. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2006086987 A
- WO 2005091462 A

- EP 1165361 B1